# EUROPEAN PATENT APPLICATION

(11) **EP 2 177 947 A1**
(43) Date of publication of application: **21.04.2010**
(21) Application number: 08783708.4
(22) Date of filing: 21.07.2008
(51) Int. Cl.: G03B 17/00, B22D 2/00

(54) **VIDEO CAMERA DEVICE FOR DETECTING MOLTEN SLAG IN FLOW OF MOLTEN STEEL**

(30) Priority: 22.07.2007 CN 200710138906
(71) Applicant: Ramon Science and Technology Co., Ltd, Hengyang, Hunan 421001 (CN)
(72) Inventor: TIAN, Zhiheng, Hengyang, Hunan 421001 (CN)
(74) Representative: Gunzelmann, Rainer
(86) International application number: PCT/CN2008/071706
(87) International publication number: WO 2009/012704

(57) **Abstract**

A camera apparatus (6) for detecting slag in a molten steel stream, including a camera lens (6b), a charge coupled device (6a) and an optical filter (6c), wherein the camera lens and the charge coupled device are common optical devices for image-pickup of visible lights; and the optical filter (6c) allows transmission of only infrared waves.

## Description

### Field of the Invention

The present invention relates to techniques for detecting slag in a molten steel stream during steelmaking and continuous casting, and more particularly, to a camera apparatus for detecting slag in a molten steel stream.

### Background of the Invention

In the art of steelmaking and continuous casting, when molten steel is poured from one vessel to another, slag may enter into the molten steel stream sometimes. In order to control and minimize the amount of the slag carried over from one vessel to another, the slag emerged in the molten steel stream should be detected. Existing detecting methods generally adopt a camera method, i.e., determining amount of the slag in the molten steel stream according to a principle that a long-wave emission rate of the slag is higher than that of the molten steel of the same temperature. An U.S. patent with U.S. Pat. No. 6,129,888 provides a method for detecting the amount of the slag in the molten steel by a long-wave infrared camera device for 8-14µ m long wavelengths. Another U.S. patent with U.S. Pat. No.6,562,285 B1 provides a method for detecting the amount of the slag in the molten steel by a Charge Coupled Device (CCD) for wavelengths less than 4µ m (i.e., short-wave infrared). Land Instruments International Ltd. provides a method for detecting the amount of the slag by an FTI6 infrared thermal imager with a working wavelength of 3.9µ m. All these solutions adopt camera devices whose working wavelengths are within an infrared range. However, these infrared camera devices are generally expensive and not everlasting.

### Summary of the Invention

Embodiments of the present invention provide a camera apparatus for detecting slag in a molten steel stream which is inexpensive, everlasting and can ensure image contrast between the slag and the molten steel.

A camera apparatus for detecting the slag in the molten steel stream disclosed by an embodiment of the present invention includes: a camera lens, a charge coupled device and an optical filter, wherein the camera lens and the charge coupled device are common optical devices for image-pickup of visible light, and the optical filter allows the transmission of only infrared waves.
Although the common optical devices are less sensitive to the infrared waves, the infrared emission rate of the molten steel and the slag are relatively high when the temperature reaches about 1650□. Through adopting the optical filter to block the waves with a wavelength shorter than that of the infrared waves, digital images ready for processing may be obtained through these common optical devices. And the brightness ratio of the slag and molten steel equals to the ratio of their emission rates, i.e., the contrast is the comparable with that obtained by applying the infrared camera devices.

### Brief Description of the Drawings

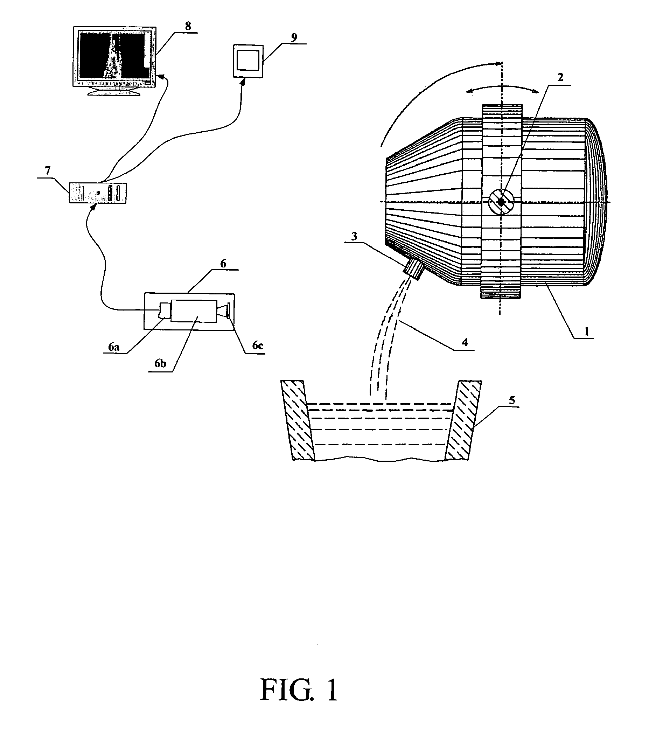

**FIG1** is a schematic diagram illustrating an apparatus for detecting slag in a molten steel stream in a converter.

### Detailed Description of the Invention

An embodiment of the present invention provides a camera apparatus for detecting slag in a molten steel stream. The camera apparatus includes: a camera lens, a charge coupled device and an optical filter. The camera lens and the charge couple device in the camera apparatus are both common optical devices for image-pickup of visible light, and the optical filter in the camera apparatus allows the transmission of only infrared waves.

The optical filter may be a far-infrared optical filter which allows the transmission of only the infrared waves with a wavelength of 8-14µ m, or an infrared optical filter which allows the transmission of waves with a wavelength larger than 3µ m.

The optical filter is placed in front of the camera lens. As such, the lights emitted by a stream of the molten steel and the slag will pass through the optical filter before passing through the camera lens.

Hereinafter, the procedure of detecting the slag in the molten steel stream using the above camera apparatus will be described in detail with reference to an embodiment of the present invention. As shown in **FIG.1****,** a converter **1** is pivoted about an axis **2,** so that the molten steel in the converter pours from a steel-tapping hole **3** to a ladle **5.** The camera apparatus **6** takes images towards a molten steel stream **4.** A charge coupled device **6a** and a camera lens **6b** in the camera apparatus **6** are common optical devices widely used in image-pickup of visible light and their qualities and working life can be ensured. An optical filter **6c** in the camera apparatus **6** allows transmission of only infrared waves, and in this embodiment, only the transmission of the infrared waves with a wavelength of 8-14µ m are allowed. In the wavelength range of 8-14µ m, the ratio the infrared emission rate of the slag to that of the molten steel is the largest. Therefore, the brightness contrast between the slag and the molten steel is comparable with that obtained by the existing long-wave infrared technique and is better than that obtained by the existing short-wave infrared technique. Image information collected by the camera apparatus **6** is transmitted to a computer **7** through a cable. The computer **7** collects statistics of brightness of pixels in an image in grades and obtains content of the slag in the molten steel stream in percentage. When the content of the slag exceeds a pre-defined threshold, a control unit **9** outputs a signal for initiating the converter's slag-blocking and an alarm signal. A monitor **8** displays the image of the molten steel stream **4** and colors the pixels with high brightness, the colored pixels representing the slag. In this embodiment, the pixels are colored as blue. And at the right part of the screen of the monitor **8,** the content of the slag in percentage is shown by the height of a graphic.

## Claims

1. A camera apparatus for detecting slag in a molten steel stream, **characterized by**, comprising: a camera lens, a charge coupled device and an optical filter, wherein the camera lens and the charge coupled device are common optical devices for image-pickup of visible lights; and the optical filter is adapted to allow the transmission of only infrared waves.

2. The camera apparatus according to claim 1, **characterized by**, the optical filter being adapted to allow the transmission of only infrared waves with a wavelength of 8-14 µ m.

3. The camera apparatus according to claim 1 or 2, **characterized by**, the optical filter being placed in front of the camera lens to make lights emitted by a stream of the molten steel and the slag pass through the optical filter before passing through the camera.
